(19) Europäisches Patentamt
European Patent Office
Office européen des brevets

(11) **EP 4 234 624 A1**

(12) **EUROPEAN PATENT APPLICATION**
published in accordance with Art. 153(4) EPC

(43) Date of publication:
**30.08.2023 Bulletin 2023/35**

(21) Application number: **21882934.9**

(22) Date of filing: **22.10.2021**

(51) International Patent Classification (IPC):
**C08L 9/06** (2006.01)   **B60C 1/00** (2006.01)
**C08K 3/36** (2006.01)   **C08K 7/02** (2006.01)
**C08K 7/22** (2006.01)

(52) Cooperative Patent Classification (CPC):
**B60C 1/00; C08K 3/36; C08K 7/02; C08K 7/22;
C08L 9/00; C08L 9/06**

(86) International application number:
**PCT/JP2021/039166**

(87) International publication number:
**WO 2022/085795 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020 JP 2020178451**

(71) Applicant: **BRIDGESTONE CORPORATION**
**Chuo-ku**
**Tokyo 104-8340 (JP)**

(72) Inventor: **IKUTA Akifumi**
**Tokyo 104-8340 (JP)**

(74) Representative: **Marks & Clerk LLP**
**15 Fetter Lane**
**London EC4A 1BW (GB)**

(54) **RUBBER COMPOSITION FOR TIRE, TREAD RUBBER, AND TIRE FOR WINTER USE**

(57)    The present disclosure provides a rubber composition for a tire, comprising: an elastomer component containing a styrenic elastomer; and a short fiber resin wherein, in a cross section taken perpendicular to a longitudinal direction of the short fiber resin, provided that A is the length of the cross section along a longest diameter thereof and B is the length of the cross section along a short diameter thereof that is perpendicular to the longest diameter, A/B is larger than 2, wherein a content of butadiene rubber is in the range of 0 to 60 mass % and a content of the styrenic elastomer is in the range of 10 to 60 mass % in the elastomer component, and a content of styrene is in the range of 0.8 to 11 mass % with respect to the sum of the butadiene rubber and the styrenic elastomer.

*FIG. 1*

EP 4 234 624 A1

**Description**

TECHNICAL FIELD

The present invention relates to a rubber composition for a tire, a tread rubber, and a tire for winter use.

BACKGROUND ART

A studless tire having a foamed rubber layer provided on tread rubber thereof has been conventionally used as a winter tire which is adapted to safe running on an icy road surface, as well as a normal road surface. That is, it is known that the on-ice performance of a tire improves by provision of a foamed rubber layer on tread rubber thereof.
It is known in this regard to apply, for example, a rubber composition containing short fiber-like resin to a foamed rubber layer of a strudless tire, so that voids generated in the studless tire as a result of melting and/or coming-off of the short fiber resin suck up a water film on an icy road surface therein, thereby causing a surface of the tire to make tight contact with the icy road surface and suppress occurrence of slippage.
JP 2018-188586 A (PTL 1) discloses a studless tire using a rubber composition containing a short fiber resin (a flat resin) wherein, in a cross section taken perpendicular to a longitudinal direction thereof, provided that A is the length of the cross section along a longest diameter thereof and B is the length of the cross section along a short diameter thereof that is perpendicular to the longest diameter, a ratio A/B is larger than 1. The on-ice performance of the studless tire indeed improves because the voids are able to suck up water vigorously due to the presence of the flat resins.

CITATION LIST

Patent Literature

PTL 1: JP 2018-188586 A

SUMMARY OF THE INVENTION

(Technical Problem)

However, the inventor of the present disclosure discovered, as a result of a keen study, fracture resistance or toughness of a tire as disclosed in PTL 1, using in tread rubber thereof a rubber composition containing flat short fiber resins, rather deteriorates, although the on-ice performance of the tire shows some improvement.
In view of this, an object of the present disclosure is to solve the prior art problems described above and provide a rubber composition for a tire, which not only is suitable for use in tread rubber of a winter tire such as a studless tire but also exhibits satisfactorily improved toughness.
Another object of the present disclosure is to provide a tread rubber and a winter tire each having satisfactorily improved toughness, by using the rubber composition as described above.

(Solution to Problem)

The primary features of the present disclosure for achieving the aforementioned objects are as follows.
A rubber composition for a tire of the present disclosure, comprises: an elastomer component containing a styrenic elastomer; and a short fiber resin wherein, in a cross section taken perpendicular to a longitudinal direction thereof, provided that A is the length of the cross section along a longest diameter thereof and B is the length of the cross section along a short diameter thereof that is perpendicular to the longest diameter, A/B is larger than 2, wherein a content of butadiene rubber is in the range of 0 to 60 mass % and a content of the styrenic elastomer is in the range of 10 to 60 mass % in the elastomer component, and a content of styrene is in the range of 0.8 to 11 mass % with respect to the sum of the butadiene rubber and the styrenic elastomer.
A tread rubber of the present disclosure is characterized in that it is formed of the rubber composition for a tire described above.
A winter tire of the present disclosure is characterized in that it includes the tread rubber described above.

(Advantageous Effect)

According to the present disclosure, it is possible to provide a rubber composition for a tire, which not only is suitable for use in tread rubber of a winter tire such as a studless tire but also exhibits satisfactorily improved toughness.

Further, according to the present disclosure, it is possible to provide a tread rubber and a winter tire each having satisfactorily improved toughness, by using the rubber composition as described above.

BRIEF DESCRIPTION OF THE DRAWINGS

In the accompanying drawing, wherein:

FIG. 1 is a schematic view of an example of a short fiber resin (a flat resin) contained in a preferable example of a rubber composition for a tire of the present disclosure;
FIG. 2 is a longitudinal sectional view of one example of a die to be mounted in a twin-screw extruder; and
FIG. 3 is a longitudinal sectional view of another example of a die to be mounted in a twin-screw extruder.

DETAILED DESCRIPTION

Hereinafter, a rubber composition for a tire, a tread rubber, and a winter tire of the present disclosure will be demonstratively described in detail based on embodiments thereof.

< Rubber composition for tire >

A rubber composition for a tire of the present disclosure (which composition may occasionally be referred to as an "elastomer composition for a tire" hereinafter) contains: an elastomer component containing a styrenic elastomer; and a short fiber resin (which may occasionally be referred to as a "flat resin" hereinafter) wherein, in a cross section taken perpendicular to a longitudinal direction thereof, provided that A is the length of the cross section along a longest diameter thereof and B is the length of the cross section along a short diameter thereof that is perpendicular to the longest diameter, a ratio A/B is larger than 2. The elastomer component may optionally contain butadiene rubber. In other words, the elastomer component may contain butadiene rubber but it is also acceptable that the elastomer component contains no butadiene rubber.
Further, with regard to the rubber composition for a tire of the present disclosure, a content of butadiene rubber is in the range of 0 to 60 mass % and a content of the styrenic elastomer is in the range of 10 to 60 mass % in the elastomer component; and a content of styrene is in the range of 0.8 to 11 mass % with respect to the sum of the butadiene rubber and the styrenic elastomer.
When the rubber composition for a tire of the present disclosure containing the flat resin described above is applied to a tire, the resin composition improves water film-removing capacity of the tire on ice, thereby successfully improving the on-ice performance of the tire. Accordingly, the rubber composition for a tire of the present disclosure is suitable for tread rubber of a winter tire such as a studless tire.
In a case where the rubber composition for a tire contains flat resins therein, intervals between the flat resins (those interval portions are composed mainly of the elastomer component) tend to be narrow, thereby allowing relatively easy generation of cracks therein. However, the rubber composition for a tire of the present disclosure can safely avoid such easy generation of cracks because the elastomer component thereof contains the styrenic elastomer and thus includes a styrene portion therein.
Further, the rubber composition exhibits satisfactorily improved toughness because a content of butadiene rubber is set to be ≤ 60 mass % (the content may be 0 mass %) and a content of the styrenic elastomer is set to be in the range of 10 to 60 mass % in the elastomer component thereof; and a content of styrene is in the range of 0.8 to 11 mass % with respect to the sum of the butadiene rubber and the styrenic elastomer, so that the elastomer component reliably includes an adequate amount of a styrene portion therein.
Accordingly, the rubber composition for a tire of the present disclosure possesses satisfactorily improved toughness.

(Elastomer component)

The rubber composition for a tire of the present disclosure contains an elastomer component. An "elastomer component" (elastomer) represents an elastic material exhibiting rubber elasticity at the room temperature (25 °C) and comprehensively includes rubbers and thermoplastic elastomers in general in the present disclosure.
The elastomer component contains a styrenic elastomer. A "styrenic elastomer" represents an elastomer having a styrene-derived unit as a monomer unit. Examples of the styrenic elastomer include a rubber having a styrene unit (a styrene rubber), a thermoplastic elastomer having a styrene unit (a styrenic thermoplastic elastomer), and the like. Either a single type or combination of two or more types as a blend, of the examples described above, may be used as the elastomer component.
A conjugated diene rubber having a styrene-derived unit therein is preferable as the styrene rubber. Examples of the conjugated diene rubber having a styrene-derived unit therein include styrene-butadiene rubber (SBR), styrene-isoprene rubber (SIR), and the like. Those examples of the styrene rubber may be modified but it is acceptable that they are not modified.

The styrenic thermoplastic elastomer (TPS) includes a styrenic polymer block (a hard segment) and a conjugated diene polymer block (a soft segment) therein, wherein the styrenic polymer block portions form physical crosslinking therebetween and thus function as crosslinking points, while the conjugated diene polymer blocks impart rubber elasticity to the TPS. At least some of the double bonds in the conjugated diene polymer block (the soft segment) may be hydrogenated. Examples of the styrenic thermoplastic elastomer (TPS) include styrene-butadiene-styrene (SBS) block copolymer, styrene-isoprene-styrene (SIS) block copolymer, styrene-butadiene-isoprene-styrene (SBIS) block copolymer, styrene-butadiene (SB) block copolymer, styrene-isoprene (SI) block copolymer, styrene-butadiene-isoprene (SBI) block copolymer, styrene-ethylene-butylene-styrene (SEBS) block copolymer, styrene-ethylene-propylene-styrene (SEPS) block copolymer, styrene-ethylene-ethylene-propylene-styrene (SEEPS) block copolymer, styrene-ethylene-butylene (SEB) block copolymer, styrene-ethylene-propylene (SEP) block copolymer, styrene-ethylene-ethylene-propylene (SEBP) block copolymer, and the like.

Preferable examples of the styrenic elastomer include styrene-butadiene rubber (SBR), styrene-butadiene-styrene (SBS) block copolymer, styrene-isoprene-styrene (SIS) block copolymer, styrene-butadiene-isoprene-styrene (SBIS) block copolymer, styrene-isoprene (SI) block copolymer, styrene-butadiene-isoprene (SBI) block copolymer, styrene-ethylene-butylene-styrene (SEBS) block copolymer, styrene-ethylene-propylene-styrene (SEPS) block copolymer, styrene-ethylene-ethylene-propylene-styrene (SEEPS) block copolymer, styrene-ethylene-butylene (SEB) block copolymer, styrene-ethylene-propylene (SEP) block copolymer, styrene-ethylene-ethylene-propylene (SEEP) block copolymer, in terms of further improving toughness of the rubber composition for a tire. Styrene-butadiene rubber (SBR) is particularly preferable among those examples. Either a single type or combination of two or more types of those examples may be used as the styrenic elastomer.

The elastomer component may contain another elastomer in addition to the styrenic elastomer described above. Examples of another elastomer include a rubber not including a styrene unit therein and a thermoplastic elastomer not including a styrene unit therein.

Examples of the rubber not having a styrene unit therein include: a rubber having an isoprene skeleton, such as natural rubber (NR), synthetic isoprene rubber (IR); butadiene rubber (BR); ethylene-propylene-diene rubber (EPDM); chloroprene rubber (CR); butyl rubber; halogenated butyl rubber; acrylonitrile-butadiene rubber (NBR); and the like.

Examples of the thermoplastic elastomer not having a styrene unit therein include thermoplastic polyolefin elastomer (TPO), thermoplastic polyamide elastomer (TPA), thermoplastic polyurethane elastomer (TPU), thermoplastic polyester copolymer (TPC), thermoplastic vulcanizates (TPV), and the like.

In the rubber composition for a tire of the present disclosure, a content of butadiene rubber is in the range of 0 to 60 mass % and a content of the styrenic elastomer is in the range of 10 to 60 mass % in the elastomer component. That is, the elastomer component may contain butadiene rubber but it is also acceptable that the elastomer component contains no butadiene rubber in the rubber composition for a tire of the present disclosure. In other words, butadiene rubber is not an essential component but an optional component in the elastomer component. A content of butadiene rubber in the elastomer component is, however, to be $\leq 60$ mass %, preferably $\leq 50$ mass %, more preferably $\leq 40$ mass %, and preferably $\geq 5$ mass %, more preferably $\geq 10$ mass %, when the elastomer component contains butadiene rubber. A content of the styrenic elastomer in the elastomer component, of $\geq 10$ mass %, improves toughness of the rubber composition for a tire. A content of the styrenic elastomer in the elastomer component, of $\leq 60$ mass %, ensures satisfactorily high contents of other elastomers, which makes it easy to improve the balance between the physical properties of the rubber composition for a tire. A content of the styrenic elastomer in the elastomer component is preferably > 12 mass %, more preferably $\geq 15$ mass %, and preferably $\leq 50$ mass %, more preferably $<_{\_} 40$ mass %.

In the rubber composition for a tire of the present disclosure, a content of styrene (a content of a styrene-derived unit) therein is in the range of 0.8 to 11 mass % with respect to the total mass of the butadiene rubber and the styrenic elastomer. The content of styrene of $\geq 0.8$ mass % improves toughness of the rubber composition for a tire and the content of styrene of $\leq 11$ mass % ensures satisfactory on-ice performance of the rubber composition for a tire. The content of styrene is preferably $\geq 1$ mass % and more preferably $\geq 2$ mass % in terms of ensuring satisfactory toughness of the rubber composition and preferably $\leq 10$ mass % and more preferably $\leq 8$ mass % in terms of ensuring satisfactory on-ice performance of the rubber composition.

In the rubber composition for a tire, it is preferable that the elastomer component further contains at least one rubber having a skeleton made up of isoprene, the rubber being selected from the group consisting of natural rubber and synthetic isoprene rubber. It is possible in this case to optimize elastic modulus of the rubber composition for a tire, i.e., make the rubber composition satisfactorily hard, in particular, for use in a tire. A content of the rubber having a skeleton made up of isoprene in the elastomer component, which may be 0 mass %, is preferably $\geq 30$ mass % and more preferably $\geq 40$ mass %, and preferably $\leq 90$ mass % and more preferably $\leq 80$ mass %.

A mass ratio of the isoprene skeleton rubber with respect to the styrenic elastomer (the isoprene skeleton rubber : the styrenic elastomer) is preferably in the range of 9 : 1 to 3 : 7. Toughness of the rubber composition for a tire further improves when the mass ratio is within the aforementioned range.

(Flat resin)

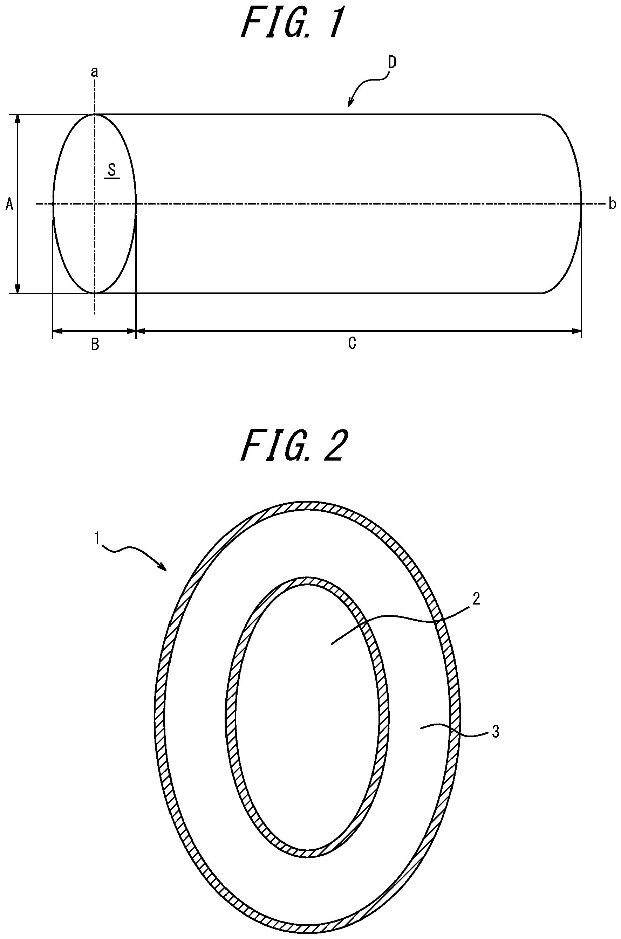

The rubber composition for a tire of the present disclosure contains a short fiber resin (which will occasionally be referred to as a "flat resin" hereinafter) wherein, in a cross section taken perpendicular to a longitudinal direction thereof, provided that A is the length of the cross section along a longest diameter thereof and B is the length of the cross section along a short diameter thereof that is perpendicular to the longest diameter, A/B is larger than 2. FIG. 1 shows a schematic view of an example of the flat resin.

FIG. 1 shows an oval shaped column-like short fiber resin (flat resin) D. The short fiber resin D has a cross section "S" taken perpendicular to a longitudinal direction "b" thereof, wherein the length "A" represents the largest length in the direction "a" of a longest diameter in the cross section "S" and the length "B" represents the largest length of the cross section "S" in the short diameter direction perpendicular to the longest diameter direction "a". In the present disclosure, a ratio of the length A of the longest diameter with respect to the length B of the short diameter, of the cross section S, i.e., A/B, is larger than 2.

Although FIG. 1 shows an example having an ellipsoidal cross section, a configuration of a cross section of the short fiber is not particularly restricted in the present disclosure and may be any of ellipsoidal, rectangular, polygonal, irregular, and the like, as long as A/B is larger than 2.

Configuration and area of a cross section (a cross section S shown in FIG. 1) taken perpendicular to a longitudinal direction, as well as a length in the longitudinal direction (a length C shown in FIG. 1), of the flat resin are not particularly restricted, as long as A/B is larger than 2. The flat resin itself has a short fiber-like configuration in terms of enhancing water absorption capacity of vulcanized rubber obtained by vulcanizing the rubber composition for a tire.

Specifically, the average area of a cross section (a cross section S shown in FIG. 1) taken perpendicular to the longitudinal direction of the flat resin is preferably in the range of 0.000001 mm$^2$ to 0.5 mm$^2$ and more preferably in the range of 0.00002 mm$^2$ to 0.2 mm$^2$ in terms of enhancing water absorption capacity of vulcanized rubber obtained by vulcanizing the rubber composition for a tire.

A configuration of a cross section (a cross section S shown in FIG. 1) taken perpendicular to the longitudinal direction of the flat resin, which may be any of ellipsoidal, triangular, rectangular, polygonal, irregular, or the like, is preferably ellipsoidal or rectangular and more preferably ellipsoidal in terms of enhancing water absorption capacity of the vulcanized rubber.

The average of a length (a length C shown in FIG. 1) in the longitudinal direction of the flat resin is preferably in the range of 0. 1 mm to 500 mm and more preferably in the range of 0.1 mm to 7 mm.

Setting the (average) area of the cross section and a length in the longitudinal direction of the flat resin to be within the aforementioned ranges not only enhances water absorption capacity of the vulcanized rubber but also prevents the short fiber resins from being entangled more than necessary, to facilitate satisfactory dispersion of the short fiber resins in the rubber composition.

It should be noted that each of the average area of a cross section (a cross section S shown in FIG. 1) taken perpendicular to the longitudinal direction of the flat resin and the average of a length in the longitudinal direction (a length C shown in FIG. 1) of the flat resin is the average value of the corresponding values of area/length C, of arbitrarily selected 100 flat resin samples. The lengths A, B, C of a flat resin can be measured by observing the resin by using an optical microscope at a magnification ratio of × 20 to × 400.

The ratio of A/B is preferably ≥ 2.01, more preferably ≥ 2.1, and even more preferably ≥ 2.2, in terms of further enhancing water absorption capacity of the vulcanized rubber. Although the upper limit of A/B is not particularly restricted, it is impossible, due to constraints in manufacturing, to increase A/B to a value larger than 10 when he short fiber resin satisfies the preferable range of cross sectional area thereof described above. Accordingly, A/B is preferably ≤ 10 in terms of manufacturing and more preferably ≤ 9 in terms of further enhancing water absorption capacity of the vulcanized rubber.

The length A of the longest diameter of a cross section of the flat resin, determined as the average value of 100 samples thereof, is preferably in the range of 0.001 mm to 2 mm and more preferably in the range of 0.005 mm to 0.5 mm in terms of further enhancing water absorption capacity of the vulcanized rubber.

A ratio (C/A) of a length in the longitudinal direction of the flat resin (a length C shown in FIG. 1) with respect to a length A of the longest diameter of a cross section of the flat resin is generally in the range of 10 to 4,000 and preferably in the range of 50 to 2,000.

A content of the flat resin in the rubber composition for a tire of the present disclosure is preferably ≥ 0.1 mass % and more preferably ≥ 1 mass % in terms of enhancing water absorption capacity of vulcanized rubber obtained by vulcanizing the rubber composition for a tire and achieving satisfactory drainability of voids formed by the vulcanization, and preferably ≤ 100 mass % in terms of retaining satisfactory durability of the vulcanized rubber, with respect to 100 parts by mass of the elastomer component. From the similar point of view, the content of the flat resin is more preferably in the range of 0.1 to 50 parts by mass and particularly preferably in the range of 0.5 to 5 parts by mass with respect to 100 parts by mass of the elastomer component.

The flat resin is preferably a composite resin including a hydrophilic resin and a coating layer provided so as to coat the hydrophilic resin, wherein the coating layer is formed of a resin having affinity for the elastomer component. That is, the flat resin is preferably a composite resin including: a hydrophilic resin as a core material; and a coating layer provided so as to coat the hydrophilic resin as the core material, wherein the coating layer is formed of a resin having affinity for the elastomer component. Since the flat resin has such a structure as described above, it is reasonably assumed that the flat resin is easily dispersed into the rubber composition and the flat resin is eventually attached in a film-like configuration to a portion/the entirety of wall surfaces of a void formed in the vulcanized rubber and having a configuration derived from the original flat resin. That is, at least a portion of wall surfaces of the void is likely to be made hydrophilic, which will facilitate water flow into the void and thus further enhance water adsorption capacity due to capillary action.

The void of the vulcanized rubber is formed by: using a resin having a melting point lower than the vulcanization temperature of the rubber composition, for the flat resin (the short fiber resin), and melting the flat resin in a vulcanization process of the rubber composition; and/or allowing the flat resin to come off from vulcanized rubber when the vulcanized rubber is rubbed by a road surface or the like. However, the void in the vulcanized rubber, i.e., a tire, is preferably a void formed by melting of the flat resin as the composite resin including a hydrophilic resin because a void, formed by the flat resin's coming off from the vulcanized rubber when the vulcanized rubber is rubbed by a road surface or the like, may have wall surfaces which are not satisfactorily hydrophilic. The hydrophilic resin and the resin having affinity for the elastomer component will be described hereinafter.

- Hydrophilic resin -

A hydrophilic resin represents a resin having a contact angle of 5° to 80° formed by water thereon in the present disclosure. A contact angle formed by water on a hydrophilic resin can be determined by: preparing a test piece by shaping the hydrophilic resin into a flat and smooth plate; and placing a water droplet on a surface of the test piece, immediately observing the water droplet on the test piece from the right beside the test piece, and measuring an angle formed between the test piece surface and a line tangent to the water droplet surface under the conditions of temperature: 25 °C and relative humidity: 55 % by using an automatic contact angle meter "DM-301" manufactured by Kyowa Interface Science Co., Ltd.

Examples of the hydrophilic resin include a resin having a hydrophilic group in a molecule thereof. Specifically, the hydrophilic resin is preferably a resin having therein at least one selected from an oxygen atom, or a nitrogen atom, and a sulfur atom. More specifically, the hydrophilic resin is preferably a resin having at least one substituent group selected from the group consisting of -OH, -COOH, -OCOR (R is an alkyl group), $-NH_2$, -NCO, and -SH. Among those examples, -OH, -COOH, -OCOR, $-NH_2$, and -NCO are preferable as the substituent group.

It is preferable that the hydrophilic resin has a small contact angle formed by water thereon and thus has affinity for water, as described above. It is also preferable that the hydrophilic resin is insoluble to water. In a case where a hydrophilic resin is insoluble to water, it is possible to prevent the hydrophilic resin from dissolving in water when water attaches to a surface of the vulcanized rubber or a surface of a tire as a product thereof and thus safely retain water absorption capacity of the void derived from the flat resin.

Specific examples of the hydrophilic resin having a small contact angle formed by water thereon and being insoluble to water as described above include polyvinyl alcohol resin (such as ethylene-vinyl alcohol copolymer, vinyl alcohol homopolymer), acrylic resin (such as poly(meth)acrylic acid resin or ester resin thereof), polyamide resin (such as aliphatic polyamide resin, aromatic polyamide resin), polyester resin, polyolefin resin, polyethylene glycol resin, carboxyvinyl copolymer, styrenemaleic acid copolymer, polyvinylpyrrolidone resin, vinylpyrrolidone-vinylacetate copolymer, and the like. At least one selected from the group consisting of polyvinyl alcohol resin, acrylic resin, polyamide resin, polyester resin, and polyolefin resin is preferable and ethylene-vinyl alcohol copolymer is particularly preferable among those examples.

-- Resin having affinity for elastomer component --

A resin having affinity for the elastomer component represents a resin having a SP value (Solubility Parameter) close to the SP value of the elastomer component contained in the rubber composition. The closer SP values results in the higher compatibility. A difference between the SP value (SP1) of the elastomer component and the SP value (SP2) of the resin, i.e., (|SP1 - Sp2|), is preferably $\leq 2.0$ MPa$^{1/2}$. The SP values of the elastomer component and the resin can be calculated by Fedors Method.

The resin having an affinity for the elastomer component is preferably a low-melting point resin having a melting point lower than the vulcanization highest temperature of the rubber composition.

The flat resin as a composite resin, including a coating layer formed of such a resin having an affinity for the elastomer component as described above, can exhibit good affinity for the elastomer component around the composite resin, while effectively retaining affinity for water, of the hydrophilic resin as the core material thereof.

In a case where the flat resin has the coating layer as described above and the rubber composition contains a blowing agent, the blowing agent can facilitate formation of voids derived from the composite resin by assisting, by foaming, the hydrophilic resin which may not become fluid quickly in the vulcanization process. That is, the flat resin as the composite resin can ensure satisfactory dispersion thereof into the rubber composition (due to the coating layer) and then cause, in the vulcanized rubber, a satisfactory drainage effect due to the hydrophilic resin and satisfactorily function as a drainage groove due to the void configuration derived from the composite resin.

Further, the low-melting point resin (of the coating layer) melts and is made fluid during the vulcanization process of the rubber composition, thereby making the coating layer fluid and thus significantly contributing to better adhesion between the elastomer component and the composite resin, so that a tire imparted with good drainage properties and high durability can be easily realized.

Thickness of the coating layer, which may vary depending on the content of the hydrophilic resin in the rubber composition, the average diameter of the composite resin, and the like, is generally in the range of 0.001 to 10 μm and preferably in the range of 0.001 to 5 μm. A synergetic effect caused by the voids having hydrophilic wall surfaces and the capillary action thereof can be easily obtained when the thickness of the coating layer is within the aforementioned ranges.

The coating layer of the composite resin may be formed on either the entire surfaces or a portion of surfaces of the hydrophilic resin. Specifically, it is preferable that the coating layer is formed on at least 50 % of the entire surface area of the composite resin.

The melting point of the low-melting point resin is lower than the highest temperature in vulcanization of the rubber composition. The vulcanization highest temperature represents the highest temperature reached by the rubber composition during the vulcanization process of the rubber composition. In a case where the rubber composition is vulcanized in a mold, for example, the vulcanization highest temperature represents the highest temperature reached by the rubber composition in a period, from the entry of the rubber composition into the mold, to the removal of the rubber composition from the mold for cooling. Such vulcanization highest temperature as described above can be measured by, for example, embedding a thermocouple in the rubber composition.

The upper limit of the melting point of the low-melting point resin, although it is not particularly restricted, is preferably selected in view of the requirements described above. In general, the upper limit of the melting point of the low-melting point resin is lower than the vulcanization highest temperature of the rubber composition preferably by at least 10 °C and more preferably by at least 20 °C. The industrial vulcanization temperature of a rubber composition is generally around 190 °C at its maximum. When the vulcanization highest temperature is set at e.g., aforementioned 190 °C, the melting point of the low-melting point resin is generally set at temperature of ≤ 190 °C, preferably ≤ 180 °C, and more preferably ≤ 170°C.

The melting point of the flat resin can be measured by a known melting point apparatus. For example, the melting peak temperature measured by a differential scanning colorimetry (DSC) measurement device can be regarded as the melting point of the flat resin.

Specifically, it is preferable that the low-melting point resin is a low-melting point resin of which contents of polar components are ≤ 50 mass % with respect to the entire components thereof. The low-melting point resin is more preferably a polyolefin resin. A resin, of which contents of polar components with respect to the entire components thereof are within the aforementioned range, exhibits an adequate difference in SP value between the elastomer component and itself and has a melting point adequately lower than the vulcanization highest temperature, whereby it is well ensured that the resin has satisfactorily high affinity for the elastomer component. Further, the coating layer easily melts in the vulcanization process, so that the melting facilitates foaming of vulcanized rubber, in a case where the rubber composition contains a blowing agent. That is, the low-melting point resin can improve dispersion of the composite resin into the rubber composition and also facilitate formation of voids derived from the composite resin in the case.

The polyolefin resin described above may be either branched or normal. Alternatively, the polyolefin resin may be an ionomer resin in which molecules of ethylene-(metha)acrylic acid copolymer are intermolecularly crosslinked by a metal ion. Specific examples of the polyolefin resin include polyethylene, polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, ionomer resins thereof, and the like. Either a single type or combination of two or more types of those examples may be used as the polyolefin resin.

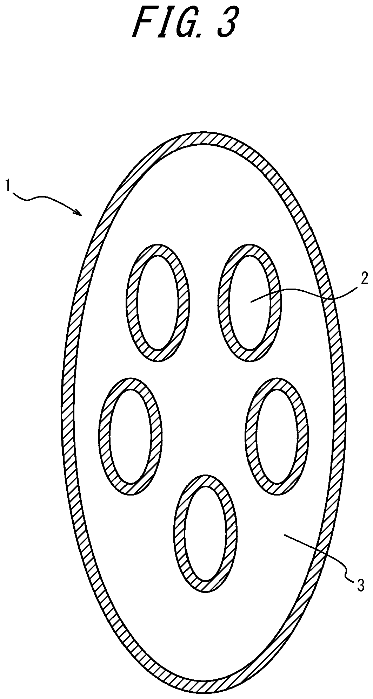

As a method for manufacturing a composite resin constituted of a hydrophilic resin and a coating layer made of a low-melting point resin and provided on the hydrophilic resin for coating, a method can be employed, which includes: blending the low-melting point resin and the hydrophilic resin by using a mixing mill; forming undrawn yarns by melt spinning the blend thus prepared; and subjecting the undrawn yarns to heat stretching, thereby forming fibers. Alternatively, it is possible to employ a method including: extruding the low-melting point resin and the hydrophilic resin by using a twin-screw extruder equipped with a die 1 as shown in FIG. 2 or FIG. 3, to form undrawn yarns; and forming fibers from the undrawn yarns thus extruded, in a manner similar to that of the method described above. The hydrophilic resin and the low-melting point resin are simultaneously extruded from an outlet 2 and an outlet 3, respectively, to form the undrawn yarns in this case.

Amounts of the low-melting point resin and the hydrophilic resin to be charged into a mixing mill or a hopper may vary depending on a length (the length C shown in FIG. 1), cross sectional area, and the like, of the composite resin to be obtained. A content of the low-melting point resin is preferably 5 to 300 parts by mass and more preferably 10 to 150 parts by mass with respect to 100 parts by mass of the hydrophilic resin. A coating layer can be easily formed on surfaces of the hydrophilic resin when the low-melting point resin and the hydrophilic resin are charged into a mixing mill or a hopper by the amounts satisfying the preferable content ranges thereof described above.

A mass content ratio of the short fiber resin with respect to the styrenic elastomer (the short fiber resin/the styrenic elastomer) is preferably in the range of 0.6 % to 10 % in the rubber composition for a tire. Satisfactory on-ice performance and satisfactory toughness can be achieved in a particularly well balanced manner in a tire having the rubber composition for a tire applied thereto when the mass content ratio is set to be within the preferable range described above.

(Filler)

The rubber composition for a tire of the present disclosure preferably further contains a filler. Hardness of the rubber composition for a tire improves when the rubber composition contains a filler. Examples of the filler include silica, carbon black, aluminum hydroxide, and the like. Either a single type or combination of two or more types of those examples may be used as the filler. A content of the filler is preferably in the range of 10 to 150 parts by mass, more preferably in the range of 20 to 100 parts by mass, and even more preferably in the range of 50 to 90 parts by mass, with respect to 100 parts by mass of the elastomer component.

The rubber composition for a tire of the present disclosure preferably contains silica. The balance between hardness and hysteresis loss of the rubber composition for a tire improves when the rubber composition contains silica as a filler, so that the on-ice performance of a tire further improves when the rubber composition is used for the tire. A content of the silica is preferably in the range of 25 to 90 parts by mass with respect to 100 parts by mass of the elastomer component. Hardness of the rubber composition for a tire satisfactorily improves when a content of silica is $\geq$ 25 parts by mass with respect to 100 parts by mass of the elastomer component, and workability during mixing and kneading the rubber composition for a tire is good when a content of silica is $\leq$ 90 parts by mass with respect to 100 parts by mass of the elastomer component. Accordingly, the balance between hardness and hysteresis loss of the rubber composition for a tire improves and workability in the mixing and kneading process is good when a content of silica is in the range of 25 to 90 parts by mass with respect to 100 parts by mass of the elastomer component.

(Void-generating agent)

The rubber composition for a tire of the present disclosure preferably further contains a void-generating agent. In a case where the rubber composition contains a void-generating agent, vulcanized rubber obtained by vulcanization of the rubber composition has voids at a surface and/or inner portions thereof, whereby a tire using the vulcanized rubber exhibits flexibility and thus tighter contact with an icy road surface than otherwise; and water on the icy road surface is sucked into the voids at a surface of the tire and thus smoothly removed from the icy road surface. Accordingly, a tire having the rubber composition for a tire applied thereto can significantly improve the on-ice performance (the on-ice braking performance) thereof.

In the present disclosure, the void-generating agent is preferably selected from the group consisting of blowing agent, metal sulfate salt, thermo-expandable microcapsule, porous cellulose, and lignin derivative. It is possible in this case to generate a satisfactorily large number of voids in the vulcanized rubber obtained by vulcanization of the rubber composition for a tire and thus further improve the on-ice performance of a tire having the rubber composition for a tire applied thereto. A blowing agent is preferable as the void-generating agent among the examples described above in terms of improving the on-ice performance of a tire. Either a single type or combination of two or more types of the examples described above may be used as the void-generating agent.

A content of the void-generating agent, which is not particularly restricted, is preferably in the range of 0. 1 to 20 parts by mass and more preferably in the range of 1 to 10 parts by mass with respect to 100 parts by mass of the elastomer component in terms of achieving satisfactory on-ice performance (on-ice braking performance) and controllability.

-- Blowing agent --

When the rubber composition containing a blowing agent is vulcanized, air bubbles are generated by the blowing agent in the resulting vulcanized rubber, thereby modifying the vulcanized rubber to a foamed rubber. A foamed rubber exhibits flexibility, whereby a surface of a tire using the vulcanized rubber as a foamed rubber exhibits tighter contact with an icy road surface than otherwise. Further, holes derived from air bubbles (foam-derived pores) are generated at a surface of the vulcanized rubber, i.e., a surface of a tire as a product of the vulcanized rubber, so that the holes function as water flow paths for drainage.

Specific examples of the blowing agent include azodicarbonamide (ADCA), dinitrosopentamethylenetetramine (DPT), dinitrosopentastyrenetetramine, a benzenesulfonyl hydrazide derivative, p,p'-oxybis(benzenesulfonyl hydrazide) (OBSH), ammonium bicarbonate capable of generating $CO_2$, sodium bicarbonate, ammonium carbonate, a nitrososulfonylazo compound capable of generating $N_2$, N,N'-dimethyl-N,N'-dinitrosophthalamide, toluenesulfonyl hydrazide, p-toluenesulfonyl semicarbazide, p,p'-oxybis(benzenesulfonyl semicarbazide), and the like. Among those examples, azodicarbonamide (ADCA) and dinitrosopentamethylenetetramine (DPT) are preferable in terms of workability in the manufacturing process. Either a single type or combination of two or more types of those examples described above may be used as the blowing agent.

A content of the blowing agent in the rubber composition, which is not particularly restricted, is preferably in the range of 1 to 10 parts by mass and more preferably in the range of 2 to 8 parts by mass with respect to 100 parts by mass of the elastomer component.

The rubber composition may further employ urea, zinc stearate, zinc benzenesulfinate, zinc white, and the like as a blowing aid. Either a single type or combination of two or more types of those examples may be used as the blowing aid. Use of a blowing aid in combination with a blowing agent facilitates a foaming reaction and thus ensures that the reaction is completed in a satisfactory manner, thereby successfully suppressing occurrence of unwanted deterioration over time.

A foaming rate is normally in the range of 1 % to 50 % and preferably in the range of 5 % to 40 % in vulcanized rubber obtained by subjecting the rubber composition containing a blowing agent to vulcanization. In a case where a blowing agent is added to the rubber composition, an excessively large void area at a rubber surface is prevented from being generated and thus a satisfactorily large ground-contact area of a tire can be ensured when the foaming rate is ≤ 50 %. Further, it is possible to ensure that air bubbles (holes derived therefrom) which are effectively functionable as drainage grooves later are satisfactorily generated, with suppressing an amount of air bubbles at an adequate level and thus avoiding deterioration of durability, by setting the foaming rate to be within the ranges described above. In the present disclosure, a "foaming rate" of the vulcanized rubber represents the average foaming rate Vs, which is specially calculated by formula (1) shown below.

$$Vs = (\rho_0/\rho_1 - 1) \times 100 \ (\%) \quad \cdots \ (1)$$

In the formula (1), $\rho_1$ represents a density (g/cm³) of the vulcanized rubber, i.e., the foamed rubber, and $\rho_0$ represents a density (g/cm³) of a solid phase portion of the vulcanized rubber, i.e., the foamed rubber. A density of the vulcanized rubber and a density of a solid phase portion of the vulcanized rubber are calculated from mass (and volume) of the vulcanized rubber measured in air and mass (and volume) of the vulcanized rubber measured in ethanol, respectively.

The foaming rate of the vulcanized rubber can be optionally adjusted by changing types, contents, etc., of the blowing agent, the blowing aid, and the like.

-- Metal sulfate salt --

A metal sulfate salt, contained in the rubber composition, projects from a surface of a tire obtained by vulcanization of the rubber composition, thereby functioning as a claw without causing any damaging abrasion. The metal sulfate salt grains then gradually come off from the rubber matrix, thereby generating voids which function as a reservoir and paths for draining a water film on an icy road surface. Under these conditions, the surface of the tire, e.g., the tread surface, no longer makes frictionless contact with ice, whereby a coefficient of friction of the tire improves.

Examples of the metal sulfate salt include magnesium sulfate, calcium sulfate, barium sulfate, and the like. Magnesium sulfate is preferable among those examples.

The metal sulfate salt is preferably a grain of micrometer size. Specifically, each of the average grain size and the median grain size (in mass distribution) is preferably in the range of 1 μm to 1 mm and the median grain size is more preferably in the range of 2 μm to 800 μm.

The technical effect as desired, i.e., formation of a surface having adequate micro roughness, can be easily achieved when each of the average grain size and the median grain size of the metal sulfate salt is ≥ 1 μm. It is possible to prevent the aesthetic characteristics of a tire from too much deterioration (i.e., suppress the metal sulfate grains from too explicitly appearing at a tread surface) and prevent the grip performance on melting ice, of the tire, from significant deterioration, when each of the average grain size and the median grain size of the metal sulfate salt is ≤ 1 mm.

Considering all the aspects described above, the median grain size of the metal sulfate salt is preferably in the range of 2 μm to 500 μm and more preferably in the range of 5 μm to 200 μm. It is assumed that i) the surface roughness as desired and ii) ideally tight contact of the rubber composition with ice can be made optimally compatible with each other when the median grain size of the metal sulfate salt is within the particularly preferable range described above.

Further, for the same reasons as described above, a content of the metal sulfate salt in the rubber composition is preferably in the range of 5 to 40 parts by mass and more preferably in the range of 10 to 35 parts by mass with respect to 100 parts by mass of the elastomer component.

Various known methods such as those using laser diffraction are applicable to analysis of the grain size and calculation of the median grain size of micro grains (or the average diameter of micro grains when the micro grains are assumed to be substantially spherical) described above. Refer to ISO 8130-13 or JIS K5600-9-3, for example, in this regard.

Further, grain size analysis by mechanical sieving can also be employed as an easy and preferable method for the analysis and calculation described above. Operations of the mechanical sieving include subjecting a sample of the prescribed amount (e.g., 200 g) to sieving on a vibrating table for 30 minutes by using sieves of various mesh diameters (e.g., by using sieves with sieve mesh widths of 1,000 μm, 800 μm, 630 μm, 500 μm, 400 μm, ..., 100 μm, 80 μm, and 63 μm, changed according to a progressive sieving ratio equal to 1.26). The oversized grains collected at each sieve was weighed by a precision balance, so that the proportion in weight (%) of the oversized grains collected at each mesh width (diameter) with respect to the total mass of the sample is assumed from the measurement results. Finally, the median grain size (or the median grain diameter) or the average grain size (or the average grain diameter) is calculated from a histogram of grain size distribution by the known methods.

-- Thermo-expandable microcapsule --

A thermo-expandable microcapsule has a structure wherein a thermo-expandable substance is incorporated in a shell material formed of a thermoplastic resin. The shell material of the thermo-expandable microcapsule can be formed by a nitril polymer. The thermo-expandable substance incorporated in the shell material of the thermo-expandable microcapsule is characteristically vaporized or expanded by heat. Examples of the thermo-expandable substance include at least one selected from the group consisting of hydrocarbons such as isoalkane and normal alkane. Examples of the isoalkane include isobutane, isopentane, 2-methylpentane, 2-methylhexane, 2,2,4-trimethylpentane, and the like. Examples of the normal alkane include n-butane, n-propane, n-hexane, n-heptane, n-octane, and the like. Either a single type or combination of two or more types of those hydrocarbons may be used as the thermo-expandable substance. A hydrocarbon which is gaseous in the room temperature, dissolved in a hydrocarbon which is liquid at the room temperature, is preferable as a form of thermo-expandable substance. A satisfactorily high expansion force can be obtained from the low temperature region to the high temperature region in the vulcanization molding temperature range (150 °C to 190 °C) of unvulcanized tire by using such a mixture of hydrocarbons as described above.

Examples of the thermo-expandable microcapsule which can be used include: product name "EXPANCEL® 091DU-80" and product name "EXPANCEL® 092DU-120" manufactured by AkzoNobel PPC Expancel, Sweden; product name "Matsumoto Microsphere® F-85D" and product name "Matsumoto Microsphere® F-100D" manufactured by Matsumoto Yushi-Seiyaku Co., Ltd.; and the like.

A content of the thermo-expandable microcapsule in the rubber composition is preferably in the range of 0.1 to 10 parts by mass and more preferably in the range of 0.5 to 5 parts by mass with respect to 100 parts by mass of the elastomer component.

-- Porous cellulose --

In a case where the rubber composition contains porous cellulose (preferably, porous cellulose particles), the porous cellulose exposed at a surface of a tire obtained by vulcanization of the rubber composition absorbs water on an icy road surface, thereby successfully removing water between the tire and the road surface. Further, presence of cellulose as polysaccharide causes the tire to interact with water on an icy road surface, thereby successfully enhancing the interaction between the tire and water due to modified polyoxyalkylene glycol.

The porous cellulose is a cellulose having a porous structure with a void rate of 75 % to 95 %. The on-ice performance of a tire can be significantly improved by inclusion of the porous cellulose in the rubber composition. An effect of improving the on-ice performance is excellent when a void rate of the porous cellulose is ≥ 75 % and strength of the porous cellulose particles is satisfactorily high when the void rate of the porous cellulose is ≤ 95 %. The void rate is more preferably in the range of 80 % to 90%.

A void rate of the porous cellulose can be obtained by: measuring a volume of a sample (i.e., the porous cellulose) having a certain mass by a measuring cylinder, to determine the bulk density of the sample; and substituting the bulk density thus determined and the true specific density of the sample to the relevant members of the formula (2) shown below.

$$\text{Void rate [\%]} = \{1 - (\text{Bulk density of the sample [g/ml]})/ (\text{True skeletal density of}$$
$$\text{the sample [g/ml]}) \} \times 100 \qquad \cdots (2)$$

In the formula (2), the true skeletal density of cellulose is 1.5.

In a case where porous cellulose particles constitute "the porous cellulose", although a particle diameter of each porous cellulose particle is not particularly restricted, the porous cellulose particles having the average particle diameter of $\leq 1,000$ $\mu$m can be preferably used in terms of obtaining satisfactory wear resistance. The lower limit of the average particle diameter of the porous cellulose particles is not particularly restricted but preferably $\geq 5$ $\mu$m. The average particle diameter of the porous cellulose particles is preferably in the range of 100 $\mu$m to 800 $\mu$m and more preferably in the range of 200 $\mu$m to 800 $\mu$m.

Spherical particles each having a ratio of longest diameter/short diameter in the range of 1 to 2 are preferably used as the porous cellulose particles. Use of the porous cellulose particles each having such a spherical structure as described above improves dispersibility of the particles into the rubber composition, which significantly contributes to improving the on-ice performance and maintaining satisfactory wear resistance in a resulting tire. The ratio of longest diameter/short diameter of the porous cellulose particle is more preferably in the range of 1.0 to 1.5.

The average particle diameter and the ratio of longest dimeter/short diameter of the porous cellulose particles are determined as described below by: obtaining images of the porous cellulose particles by observation using a microscope; measuring, based on the images thus obtained, lengths of longest diameters and short diameters (lengths of one diameter and another diameter orthogonal thereto when the longest diameter and the short diameter are equal) for 100 particles; calculating the average value of the lengths of diameters thus measured, to obtain "the average particle diameter"; and dividing each longest diameter by the corresponding short diameter to get a ratio and calculating the average value of the 100 ratios thus collected, to obtain "the ratio of the longest diameter/short diameter".

Examples of the porous cellulose particles which can be suitably used in the present disclosure include: commercially available "Viscopearl" manufactured by Rengo Co., Ltd.; and the porous cellulose particles disclosed in JP 2001-323095 A, JP 2004-115284, and the like.

A content of the porous cellulose in the rubber composition is preferably in the range of 0.3 to 20 parts by mass with respect to 100 parts by mass of the elastomer component. An effect of improving the on-ice performance of a tire can be enhanced when the content of the porous cellulose is $\geq 0.3$ parts by mass. It is possible to prevent rubber hardness from being too high and thus suppress deterioration of wear resistance when the content of the porous cellulose is $\leq 20$ parts by mass. A content of the porous cellulose particles in the rubber composition is preferably in the range of 1 to 15 parts by mass and more preferably in the range of 3 to 15 parts by mass with respect to 100 parts by mass of the elastomer component.

-- Lignin derivative --

Preferable examples of the lignin derivative include lignin sulfonic acid, lignin sulfonic acid salt, and the like. The lignin derivative may be obtained by either sulfite pulping or Kraft pulping.

The lignin derivative contains lignin sulfonic acid and/or lignin sulfonic acid salt, in which at least a portion of lignin and/or a decomposed product thereof has been substituted with sulfo group. The sulfo group of the lignin sulfonic acid may be in either a non-ionizing state or a state where hydrogen atom thereof has been substituted with an ion such as a metal ion.

Examples of the lignin sulfonic acid salt include alkali metal salt, alkali earth metal salt, ammonium salt, alcohol amine salt, and the like of lignin sulfonic acid. Alkali metal salt (potassium salt, sodium salt, and the like) and alkali earth metal salt (calcium salt, magnesium salt, lithium salt, barium salt, and the like) of lignin sulfonic acid are preferable among those examples.

A content of the lignin derivative in the rubber composition is preferably in the range of 0.3 to 20 parts by mass with respect to 100 parts by mass of the elastomer component. An effect of improving the on-ice performance of a tire can be enhanced when the content of the lignin derivative is $\geq 0.3$ parts by mass. It is possible to prevent rubber hardness from being too high and thus suppress deterioration of wear resistance when the content of the lignin derivative is $\leq 20$ parts by mass. A content of the lignin derivative in the rubber composition is preferably in the range of 1 to 15 parts by mass and more preferably in the range of 3 to 15 parts by mass with respect to 100 parts by mass of the elastomer component.

(Softener)

It is preferable that the rubber composition for a tire of the present disclosure further contains a softener. A softener contained in the rubber composition improves workability of the rubber composition during mixing and kneading.

Examples of the softener include: petroleum-based softeners such as process oil, lubricant oil, naphthene oil, paraffin, liquid paraffin, petroleum asphalt, and Vaseline; fatty oil-based softeners such as caster oil, linseed oil, rapeseed oil, and palm oil; waxes such as beeswax, Carnauba wax, and lanolin; liquid polymer; and the like. Either a single type or combination of two or more types of those examples may be used as the softener. Liquid polymer is preferably used as the softener among the examples described above.

The weight average molecular weight of the liquid polymer is preferably ≥ 6,000, more preferably ≥ 7,000, and even more preferably ≥ 8,000 in terms of improving the on-ice performance of a resulting tire. From the same point of view, the weight average molecular weight of the liquid polymer is preferably ≤ 20,000 and more preferably ≤ 14,500.

The rubber composition may contain at least one selected from the group consisting of liquid polymer and acrylic resin.

In a case where the rubber composition contains at least one selected from the group consisting of liquid polymer and acrylic resin, the total content of the liquid polymer and the acrylic resin is preferably ≥ 1 parts by mass with respect to 100 parts by mass of the elastomer component. It is relatively easy to ensure satisfactory low-fuel consumption property and toughness, while improving the on-ice performance, of a tire, when the rubber composition, containing the liquid polymer and the acrylic resin so that the total content thereof is within the aforementioned preferable range, is applied to the tire. From the same point of view, the total content of the liquid polymer and the acrylic resin is preferably ≥ 5 parts by mass, more preferably ≥ 7 parts by mass, and preferably ≤ 35 parts by mass, more preferably ≤ 30 parts by mass, and even more preferably ≤ 25 parts by mass, with respect to 100 parts by mass of the elastomer component.

Examples of the liquid polymer, of which type is not particularly restricted, include: diene-based liquid polymer such as liquid polyisoprene, liquid polybutadiene, and liquid styrene-butadiene copolymer; liquid polybutene; liquid silicone polymer; silane-based liquid polymer; and the like. Liquid polybutadiene is preferably used among those examples. Either a single type or combination of two or more types of the examples described above may be used as the liquid polymer.

In a case where the rubber composition contains an isoprene skeleton rubber such as natural rubber (NR), a vinyl bond content in the liquid polybutadiene is preferably ≥ 20 %. Presence of the liquid polybutadiene in the isoprene skeleton rubber phase is facilitated when a vinyl bond content in the liquid polybutadiene is ≥ 20 %. In terms of further facilitating presence of the liquid polybutadiene in the isoprene skeleton rubber phase, a vinyl bond content in the liquid polybutadiene is preferably ≥ 30 %, more preferably ≥ 40 %, even more preferably ≥ 45 %, and particularly preferably ≥ 50 %. Further, in terms of suppressing an increase in hardness of the rubber composition, a vinyl bond content in the liquid polybutadiene is preferably ≤ 70 %, more preferably ≤ 65 %, and even more preferably ≤ 59 %.

The total content of the softener(s) is preferably ≥ 1 parts by mass, more preferably ≥ 5 parts by mass, even more preferably ≥ 7 parts by mass, particularly preferably ≥ 10 parts by mass, and preferably ≤ 35 parts by mass, more preferably ≤ 30 parts by mass, and even more preferably ≤ 25 parts by mass, with respect to 100 parts by mass of the elastomer component in terms of obtaining satisfactory on-ice performance and toughness of a resulting tire.

(Other components)

In addition to the elastomer component, the short fiber resin (the flat resin), the filler, the void-generating agent, and the softener described above, compounding agents generally employed in the rubber industry, such as stearic acid, antioxidant, silane coupling agent, zinc oxide (zinc white), vulcanization accelerator, vulcanizing agent, and the like may be optionally selected and added to the rubber composition for a tire of the present disclosure unless the addition thereof adversely affects the objects of the present disclosure. Commercially available products can be suitably used as those compounding agents.

In a case where the rubber composition for a tire of the present disclosure contains silica, the rubber composition preferably contains a silane coupling agent, so that an effect caused by the silica is enhanced. Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, (3-mercaptopropyl)trimethoxysilane, (3-mercaptopropyl)triethoxysilane, (2-mercaptoethyl)trimethoxysilane, (2-mercaptoethyl)triethoxysilane, 3-trimethoxy silylpropyl -N,N-dimethylthiocarbamoyl tetrasulfide, 3 -triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, (3 -mercaptopropyl)dimethoxymethyl silane, dimethoxymethylsilylpropyl-N,N-dimethylthiocarbamoyl tetrasulfide, dimethoxymethylsilylpropylbenzothiazolyl tetrasulfide, and the like. A content of the silane coupling agent is preferably in the range of 2 to 20 parts by mass and more preferably in the range of 5 to 15 parts by mass with respect to 100 parts by mass of the silica.

Examples of the vulcanizing agent include sulfur, and the like. A content of the vulcanizing agent, expressed as a content of sulfur, is preferably in the range of 0.1 to 10 parts by mass and more preferably in the range of 1 to 4 parts by mass with respect to 100 parts by mass of the elastomer component.

Examples of the vulcanization accelerator include thiazole-based vulcanization accelerator, guanidine-based vulcanization accelerator, and the like. Either a single type or combination of two or more types of those examples may be used as the vulcanization accelerator. A content of the vulcanization accelerator is preferably in the range of 0.1 to 5 parts by mass and more preferably in the range of 0.2 to 3 parts by mass with respect to 100 parts by mass of the elastomer component.

The rubber composition for a tire of the present disclosure can be manufactured by, for example: blending, mixing and kneading the elastomer component, the short fiber resin (flat resin), and various compounding agent(s) optionally selected according to necessity, by using a Banbury mixer, a roll, or the like; and subjecting the mixture thus mixed and kneaded, to warming, extrusion, and the like.

The rubber composition for a tire of the present disclosure is applicable to various structural members of a tire. The rubber composition for a tire of the present disclosure is particularly suitable for tread rubber of a tire.

< Tread rubber >

A tread rubber of the present disclosure is characterized in that the tread rubber is made of the rubber composition for a tire described above. The tread rubber of the present disclosure, made of the rubber composition for a tire described above, exhibits improved toughness. The tread rubber can significantly improve toughness and the on-ice performance of a tire when it is applied to the tire.

The tread rubber of the present disclosure may be applied to either a new tire or a retreaded tire.

< Winter tire >

A winter tire of the present disclosure is characterized in that it has the tread rubber described above. The winter tire of the present disclosure, having the tread rubber described above and thus possessing improved toughness, exhibits excellent toughness and on-ice performance. Examples of the winter tire of the present disclosure include a studless tire.

The winter tire of the present disclosure may be manufactured, depending on type of the desired tire, by either i) molding the aforementioned rubber composition in an unvulcanized state and subjecting a resulting green tire to vulcanization or ii) subjecting the aforementioned rubber composition to a preliminary vulcanization process, molding a resulting half-vulcanized rubber, and subjecting a resulting tire to a main vulcanization process. The winter tire of the present disclosure is preferably a pneumatic tire, wherein examples of gas with which the is to be inflated include inert gas such as nitrogen, argon, helium or the like, as well as ambient air and air of which oxygen partial pressure has been adjusted.

EXAMPLES

The present disclosure will be described further in detail by Examples hereinafter. The present disclosure is not limited by any means to these Examples.

< Preparation and evaluation of rubber composition >

Rubber composition samples were prepared by using a conventional Banbury mixer according to the blend formulations shown in Table 1. Toughness or fracture resistance was evaluated for each of the rubber composition samples by the method described below. The results are shown in Table 1.

Further, the rubber composition samples of Comparative Example 3 and Example 1 were vulcanized, whereby two vulcanized rubber samples were obtained. A foaming rate was calculated according to the formula (1) described above and the on-ice performance was evaluated by the method described below for each of the two vulcanized rubber samples thus obtained. The results are shown in Table 2.

(1) Toughness

The rubber composition samples were vulcanized by the conventional method, whereby vulcanized rubber samples were obtained. Tensile stress at break (TB) was measured for each of the vulcanized rubber samples, by preparing a No. 3 dumbbell test piece from the vulcanized rubber sample and subjecting the test piece to tensile tests at 25 °C according to JIS-K6251: 2004. The tensile stress at bread (TB) thus measured was expressed by an index relative to the TB value of Comparative Example 1 being "100". The larger index value represents the larger tensile stress at break (TB), i.e., the better toughness.

(2) On-ice performance

A dynamic friction coefficient μ was determined by: cutting out a test piece (shape: a square of 25 mm × 25 mm, thickness: 2 mm) from each of the vulcanized rubber samples of Comparative Example 3 and Example 1; pressing the test piece against fixed ice (-2 °C), moving the test piece on the ice reciprocatingly with continually pressing the test piece on the ice, and detecting a frictional force experienced during the reciprocal movement of the test piece, by a load cell; and calculating a dynamic friction coefficient μ from the frictional force thus detected. Each of the dynamic friction coefficient μ values thus determined was expressed by an index relative to the dynamic friction coefficient μ of Comparative Example 3 being "100". The larger index value represents the larger dynamic friction coefficient μ, i.e., the better on-ice performance.

[Table 1]

| Blend formulation | | | Parts by mass | Comp. Example 1 | Comp. Example 2 | Comp. Example 3 | Example 1 | Comp. Example 4 |
|---|---|---|---|---|---|---|---|---|
| | Elastomer component | N R  *1 | | 50.03 | 50.03 | 50.03 | 50.03 | 70.03 |
| | | B R − 1  *2 | | - | - | 30 | 30 | - |
| | | B R − 2  *3 | | 50 | 50 | - | - | 30 |
| | | S B R  *4 | | - | - | 20 | 20 | - |
| | Oil  *5 | | | 20 | 20 | 20 | 20 | 20 |
| | Short fiber resin (circular cross section)  *6 | | | 2 | - | 2 | - | - |
| | Short fiber resin (ellipsoidal cross section)  *7 | | | - | 2 | - | 2 | 2 |
| | Filler (carbon black)  *8 | | | 35 | 35 | 35 | 35 | 35 |
| | Filler (silica)  *9 | | | 35 | 35 | 35 | 35 | 35 |
| | Silane coupling agent  *10 | | | 4 | 4 | 4 | 4 | 4 |
| | Resin  *11 | | | 15 | 15 | 15 | 15 | 15 |
| | Stearic acid  *12 | | | 2 | 2 | 2 | 2 | 2 |
| | Zinc white  *13 | | | 2 | 2 | 2 | 2 | 2 |
| | Vulcanization accelerator  *14 | | | 1.5 | 1.5 | 1.5 | 1.5 | 1.5 |
| | Vulcanizing agent  *15 | | | 2 | 2 | 2 | 2 | 2 |
| | Antioxidant  *16 | | | 2 | 2 | 2 | 2 | 2 |
| | Blowing agent  *17 | | | 4 | 4 | 4 | 4 | 4 |
| Content of styrene with respect to the sum of butadiene rubber and styrenic elastomer | | | Mass % | 0.0 | 0.0 | 4.0 | 4.0 | 0.0 |
| Evaluation | Toughness (TB) | | Index | 100 | 97 | 106 | 107 | 103 |

*1    NR: Natural rubber, TSR20

*2    BR-1: Unmodified butadiene rubber, product name "UBEPOL BR150L" manufactured by UBE Corporation

*3    BR-2: Modified butadiene rubber manufactured by the method described below (modified BR)

*4    SBR:    Modified styrene-butadiene rubber manufactured by the method described below (modified SBR)

< Method for synthesizing modified BR >

(1) Preparation of catalyst

A catalyst solution was prepared by:

charging 7.11 g of a cyclohexane solution of butadiene (15.2 mass %), 0.59 mL of a cyclohexane solution of neodymium neodecanoate (0.56 mol/L), 10.32 mL of a toluene solution of methylaluminoxane MAO (product name "PMAO" manufactured by Tosoh Akuzo Corporation) (3.23 mol/L as a concentration of aluminum), and 7.77 mL of a hexane solution of diisobutylaluminum hydride (manufactured by KANTO CHEMICAL Co., INC.) (0.90 mol/L) in this order into a dry, nitrogen-substituted glass bottle (volume: 100 mL) with a rubber stopper; and
aging the mixture at the room temperature for 2 minutes, adding 1.45 mL of a hexane solution of diethylaluminum chloride (manufactured by KANTO CHEMICAL Co., INC.) (0.95 mol/L) thereto, and further aging the solution at the room temperature, with occasional stirring, for 15 minutes.

The concentration of neodymium in the catalyst solution thus obtained was 0.011 mol/L.

(2) Preparation of polymer as intermediate product

A polymer as an intermediate product was prepared by:

charging a cyclohexane solution of dried and purified butadiene, as well as dried cyclohexane, into a dry, nitrogen-substituted glass bottle (volume: approximately 900 mL) with a rubber stopper, so as to realize the same state as charging 400 g of a cyclohexane solution of butadiene (12.5 mass %) therein; and
then charging 2.28 mL of the catalyst solution prepared in (1) above (0.025 mmol in terms of neodymium) into the glass bottle, carrying out polymerization in a hot water bath at 50 °C for 1.0 hour, thereby obtaining a polymer as an intermediate product.

The polymer as an intermediate product thus obtained had a microstructure with cis-1,4-bond content: 95.5 %, trans-1,4-bond content: 3.9 %, and vinyl-1,4-bond content: 0.6 %.

(3) Modifying treatment

A modified polybutadiene (modified BR) was obtained by:

adding a hexane solution of 3-glycidoxypropyltrimethoxysilane (concentration of 3-glycidoxypropyltrimethoxysilane: 1.0 mol/L) to the polymerization solution obtained in (2) above, such that 23.5 equivalents of 3-glycidoxypropyltrimethoxysilane was present per mole equivalent of neodymium, and processing the resulting reaction mixture at 50 °C for 60 minutes;
then adding 1.2 mL of sorbitan trioleate (manufactured by KANTO CHEMICAL Co., INC.) to the reaction mixture and carrying out a modification reaction at 60 °C for 1 hour;
adding, to the polymerization system, 2 mL of an isopropanol solution of antioxidant 2,2'-methylene-bis(4-ethyl-6-t-butylphenol) (NS-5) (NS-5 concentration: 5 mass %) to stop the reaction; and
causing reprecipitation of the system in isopropanol containing a small amount of NS-5 and subjecting the precipitation to drum drying, thereby obtaining a modified polybutadiene (modified BR).

Macrogel was not observed in the modified BR and Mooney viscosity at 100 °C (ML 1+4; 100 °C) of the modified BR was 59. The modified BR had the same microstructures as those of the polymer as an intermediate product described above.

< Method for synthesizing modified SBR >

A modified SBR was obtained by:

charging a cyclohexane solution of 1,3-butadiene and a cyclohexane solution of styrene into a dry, nitrogen-substituted pressure-resistant glass vessel having inner volume: 800 mL, such that 67.5 g of 1,3-butadiene and 7.5 g of styrene were present therein;
adding 0.6 mmol of 2,2-ditetrahydrofurylpropane and 0.8 mmol of n-butyllithium to the mixture and carrying out polymerization at 50 °C for 1.5 hours;
adding, when the polymerization conversion ratio in the polymerization reaction system reached substantially 100 %, 0.72 mmol of N,N-bis(trimethylsilyl)-3-[diethoxy(methyl)silyl]propylamine as a modifying agent to the system and carrying out a modification reaction at 50 °C for 30 minutes;
then adding 2 mL of an isopropanol solution of 2,6-di-t-butyl-p-cresol (BHT) (BHT concentration: 5 mass %) to the reaction solution to stop the reaction; and
drying a resulting substance by the conventional method, thereby obtaining a modified SBR.

Analysis of the microstructure of the modified SBR thus obtained revealed that a content of bonded styrene was 10 mass % and a vinyl bond content of butadiene portion was 40%.

*5 Oil: Softener, product name "Diana Process Oil NS-28" manufactured by Idemitsu Kosan Co., Ltd.
*6 Short fiber resin (circular cross section): Hydrophilic short fibers were prepared by: charging 40 parts by mass of polyethylene ["Novatec™HJ360" (MFR 5.5, melting point 132 °C) manufactured by Japan Polyethylene Corporation] and 40 parts by mass of ethylene-vinyl alcohol copolymer ["EVAL™F104B" (MFR 4.4, melting point 183 °C) manufactured by Kuraray Co., Ltd.] in a hopper and extruding the polyethylene and the ethylene-vinyl alcohol copolymer simultaneously from two outlet ports, respectively, by using two twin-screw extruders according to Manufacturing Example 3 disclosed in JP 2012-219245; and cutting fibers thus manufactured, in the conventional manner, to pieces each having 2 mm to 4 mm, thereby obtaining hydrophilic short fibers each having a coating layer of polyethylene formed thereon. In a cross section taken perpendicular to a longitudinal direction of each of the hydrophilic short fibers thus obtained, provided that A is the length of the cross section along a longest diameter thereof and B is the length of the cross section along a short diameter thereof that is perpendicular to the longest diameter, A/B = 1.0.
*7 Short fiber resin (ellipsoidal cross section): a short fiber resin having an ellipsoidal cross section as Resin 4 (flat resin) used in Example 4 of WO2018/207472, which is a short fiber obtained by forming a coating layer made of polyethylene (product name "Novatec™ HJ360" manufactured by Japan Polyethylene Corporation) on a surface of a hydrophilic fiber made of ethylene-vinyl alcohol copolymer (product name "EVAL™F104B" manufactured by Kuraray Co., Ltd.), wherein, in a cross section taken perpendicular to a longitudinal direction of the flat resin, provided that A is the length of the cross section along a longest diameter thereof and B is the length of the cross section along a short diameter thereof that is perpendicular to the longest diameter, a ratio of A/B was controllably set to be in the range of 2.01 to 10, the average value of the length A = 0.05 mm, the average area of a cross section taken perpendicular to a longitudinal direction of the flat resin = 0.0007 mm$^2$, and the average of a length C in the longitudinal direction of the flat resin = 3 mm.
*8 Filler (carbon black): of a grade corresponding to N134
*9 Filler (silica): manufactured by TOSOH SILICA CORPORATION, CTAB = 155 m$^2$/g
*10 Silane coupling agent: product name "ABC-856" manufactured by ShinEtsu Chemical Co., Ltd.
*11 Resin: product name "HI-REZ G-100X" manufactured by Mitsui Petrochemical Industries
*12 Stearic acid: product name "50S" manufactured by New Japan Chemical Co., Ltd. *13 Zinc white: product name "Zinc Oxide JIS#2", powder, manufactured by HAKUSUI TECH Co., Ltd.
*14 Vulcanization accelerator: the total amount, including product name "Nocceler CZ-G" manufactured by Ouchi-Shinko Chemical Industrial Co., Ltd., of 1.5 parts by mass
*15 Vulcanizing agent: product name "SULFAX® 5" manufactured by Tsurumi Chemical Industry Co., Ltd.
*16 Antioxidant: product name "Antigen (6C)" manufactured by Sumitomo Chemical Co., Ltd.
*17 Blowing agent: N,N'-dinitrosopentamethylenetetramine

[Table 2]

|  |  |  | Comp. Example 3 | Example 1 |
|---|---|---|---|---|
| Evaluation | On-ice performance | Index | 100 | 102 |
|  | Foaming rate | % | 18.7 | 16.7 |

It is understood from Table 1 that the rubber composition of Comparative Example 2, containing the flat resin, exhibits poorer toughness than the rubber composition of Comparative Example 1.

Further, it is understood from Table 1 and Table 2 that the rubber composition of Comparative Example 3, containing styrenic elastomer, exhibits better toughness than the rubber composition of Comparative Example 1 but performs poorly on ice, as compared with the rubber composition of Example 1, because the rubber composition of Comp. Example 3 fails to contain the flat resin.

In contrast, the rubber composition of Example 1 according to the present disclosure, containing the flat resin and styrenic elastomer, exhibits much better toughness than the rubber composition of Comparative Example 1 (surprisingly, better toughness than the rubber composition of Comparative Example 3).

REFERENCE SIGNS LIST

a: Direction along longest diameter in cross section taken perpendicular to longitudinal direction of short fiber resin
b: Longitudinal direction of short fiber
S: Cross section taken perpendicular to longitudinal direction of short fiber resin
A: Length of cross section along longest diameter thereof, the cross section taken perpendicular to longitudinal direction of short fiber resin
B: Length of cross section along short diameter that is perpendicular to longest diameter, the cross section taken perpendicular to longitudinal direction of short fiber resin
C: Length in longitudinal direction of short fiber resin
D: Short fiber resin
1: Die of twin-screw extruder
2: Die outlet port for hydrophilic resin
3: Die outlet port for resin having affinity for elastomer component

**Claims**

1.   A rubber composition for a tire, comprising:

an elastomer component containing a styrenic elastomer; and
a short fiber resin wherein, in a cross section taken perpendicular to a longitudinal direction of the short fiber resin, provided that A is the length of the cross section along a longest diameter thereof and B is the length of the cross section along a short diameter thereof that is perpendicular to the longest diameter, A/B is larger than 2, wherein a content of butadiene rubber is in the range of 0 to 60 mass % and a content of the styrenic elastomer is in the range of 10 to 60 mass % in the elastomer component, and
a content of styrene is in the range of 0.8 to 11 mass % with respect to the sum of the butadiene rubber and the styrenic elastomer.

2.   The rubber composition for a tire of claim 1, wherein a mass content ratio of the short fiber resin with respect to the styrenic elastomer (the short fiber resin/the styrenic elastomer) is in the range of 0.6 % to 10 %.

3.   The rubber composition for a tire of claim 1 or 2, wherein the styrenic elastomer is at least one selected from the group consisting of styrene-butadiene rubber (SBR), styrene-butadiene-styrene (SBS) block copolymer, styrene-isoprene-styrene (SIS) block copolymer, styrene-butadiene-isoprene-styrene (SBIS) block copolymer, styrene-isoprene (SI) block copolymer, styrene-butadiene-isoprene (SBI) block copolymer, styrene-ethylene-butylene-styrene (SEBS) block copolymer, styrene-ethylene-propylene-styrene (SEPS) block copolymer, styrene-ethylene-ethylene-propylene-styrene (SEEPS) block copolymer, styrene-ethylene-butylene (SEB) block copolymer, styrene-ethylene-propylene (SEP) block copolymer, and styrene-ethylene-ethylene-propylene (SEEP) block copolymer.

4. The rubber composition for a tire of any of claims 1 to 3, wherein the elastomer component contains at least one isoprene skeleton rubber selected from the group consisting of natural rubber (NR) and synthetic isoprene rubber (IR).

5. The rubber composition for a tire of claim 4, wherein a mass ratio of the isoprene skeleton rubber with respect to the styrenic elastomer, or the isoprene skeleton rubber : the styrenic elastomer, is in the range of 9 : 1 to 3 : 7.

6. The rubber composition for a tire of any of claims 1 to 5, further comprising silica, wherein a content of the silica is in the range of 25 to 90 parts by mass with respect to 100 parts by mass of the elastomer component.

7. The rubber composition for a tire of any of claims 1 to 6, further comprising a void-generating agent.

8. The rubber composition for a tire of claim 7, wherein the void-generating agent is selected from the group consisting of blowing agent, metal sulfate salt, thermo-expandable microcapsule, porous cellulose, and lignin derivative.

9. A tread rubber, **characterized in that** it is formed of the rubber composition for a tire of any of claims 1 to 8.

10. A winter tire, **characterized in that** it includes the tread rubber of claim 9.

# FIG. 1

# FIG. 2

# FIG. 3

## INTERNATIONAL SEARCH REPORT

International application No.

**PCT/JP2021/039166**

### A. CLASSIFICATION OF SUBJECT MATTER

*C08L 9/06*(2006.01)i; *B60C 1/00*(2006.01)i; *C08K 3/36*(2006.01)i; *C08K 7/02*(2006.01)i; *C08K 7/22*(2006.01)i
FI: C08L9/06; C08K7/02; C08K3/36; C08K7/22; B60C1/00 A

According to International Patent Classification (IPC) or to both national classification and IPC

### B. FIELDS SEARCHED

Minimum documentation searched (classification system followed by classification symbols)

C08K3/00-13/08;C08L1/00-101/14;B60C1/00-19/12;D01F1/00-6/96;9/00-9/04;C08J9/00-9/42

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2007-169813 A (TORAY IND INC) 05 July 2007 (2007-07-05)<br>entire text | 1-10 |
| A | JP 2006-225770 A (TORAY IND INC) 31 August 2006 (2006-08-31)<br>entire text | 1-10 |
| A | JP 2018-021111 A (BRIDGESTONE CORP) 08 February 2018 (2018-02-08)<br>entire text | 1-10 |
| A | JP 2012-219245 A (BRIDGESTONE CORP) 12 November 2012 (2012-11-12)<br>entire text | 1-10 |
| A | JP 2018-178034 A (BRIDGESTONE CORP) 15 November 2018 (2018-11-15)<br>entire text | 1-10 |
| A | JP 2018-188586 A (BRIDGESTONE CORP) 29 November 2018 (2018-11-29)<br>entire text | 1-10 |
| A | JP 10-095874 A (TEIJIN LTD) 14 April 1998 (1998-04-14)<br>entire text | 1-10 |

☑ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 December 2021** | **14 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 234 624 A1

## INTERNATIONAL SEARCH REPORT

International application No.

**PCT/JP2021/039166**

### C. DOCUMENTS CONSIDERED TO BE RELEVANT

| Category* | Citation of document, with indication, where appropriate, of the relevant passages | Relevant to claim No. |
|---|---|---|
| A | JP 5-149331 A (BANDO CHEM IND LTD) 15 June 1993 (1993-06-15)<br>entire text | 1-10 |
| A | US 2011/0259492 A1 (FOSAM, Richard Mbewo Samwayeba. LECHTENBOEHMER, Annette. WELTER, Carolin Anna) 27 October 2011 (2011-10-27)<br>entire text | 1-10 |
| A | US 2009/0151840 A1 (LECHTENBOEHMER, Annette. WIECZOREK, David Gilbert) 18 June 2009 (2009-06-18)<br>entire text | 1-10 |

Form PCT/ISA/210 (second sheet) (January 2015)

23

## INTERNATIONAL SEARCH REPORT
### Information on patent family members

| International application No. |
| --- |
| **PCT/JP2021/039166** |

| Patent document cited in search report | | | Publication date (day/month/year) | Patent family member(s) | | | Publication date (day/month/year) |
| --- | --- | --- | --- | --- | --- | --- | --- |
| JP | 2007-169813 | A | 05 July 2007 | (Family: none) | | | |
| JP | 2006-225770 | A | 31 August 2006 | (Family: none) | | | |
| JP | 2018-021111 | A | 08 February 2018 | US | 2019/0202238 | A1 | |
| | | | | entire text | | | |
| | | | | WO | 2018/025728 | A1 | |
| | | | | EP | 3495418 | A1 | |
| | | | | CN | 109563320 | A | |
| JP | 2012-219245 | A | 12 November 2012 | US | 2014/0039080 | A1 | |
| | | | | entire text | | | |
| | | | | WO | 2012/140900 | A1 | |
| | | | | EP | 2698397 | A1 | |
| | | | | CN | 103476853 | A | |
| | | | | CN | 105754154 | A | |
| JP | 2018-178034 | A | 15 November 2018 | (Family: none) | | | |
| JP | 2018-188586 | A | 29 November 2018 | US | 2020/0070578 | A1 | |
| | | | | entire text | | | |
| | | | | WO | 2018/207472 | A1 | |
| | | | | EP | 3623419 | A1 | |
| | | | | CN | 110637056 | A | |
| JP | 10-095874 | A | 14 April 1998 | (Family: none) | | | |
| JP | 5-149331 | A | 15 June 1993 | (Family: none) | | | |
| US | 2011/0259492 | A1 | 27 October 2011 | EP | 2380757 | A2 | |
| | | | | CN | 102233793 | A | |
| | | | | KR | 10-2011-0119558 | A | |
| US | 2009/0151840 | A1 | 18 June 2009 | EP | 2072283 | A1 | |
| | | | | CN | 101462467 | A | |

Form PCT/ISA/210 (patent family annex) (January 2015)

**REFERENCES CITED IN THE DESCRIPTION**

**Patent documents cited in the description**

- JP 2018188586 A
- JP 2001323095 A
- JP 2004115284 A
- JP 2012219245 A
- WO 2018207472 A